# EUROPEAN PATENT SPECIFICATION

(11) **EP 1 650 998 B1**
(45) Date of publication and mention of the grant of the patent: **17.12.2008**
(21) Application number: 05109623.8
(22) Date of filing: 17.10.2005
(51) Int. Cl.: H04Q 7/38

(54) **Re-routing of a circuit-switched network call**
Umleitung eines leitungsvermittelten Anrufs
Reacheminement d'une appel d'un réseau à commutation de circuit

(30) Priority: 20.10.2004 FI 20045394
(43) Date of publication of application: 26.04.2006
(73) Proprietor: TeliaSonera Finland Oyj, 00510 Helsinki (FI)
(72) Inventor: Jokela, Harri, 00350 Helsinki (FI)
(74) Representative: Smolander, Jouni Juhani

(56) References cited:
- WO-A-01/31963
- US-A1- 2002 089 975
- US-A1- 2002 150 091
- US-A1- 2003 187 926
- 3GPP GROUP SERVICES AND SYSTEM ASPECTS: "TR 23.979 V1.1.0:3GPP enablers for OMA PoC Services" 3GPP TR 23.979 V1.1.0, August 2004 (2004-08), page complete, XP002321832

## Description

### FIELD OF THE INVENTION

The present invention relates to group communication, and more particularly to re-routing of a circuit-switched call.

### BACKGROUND OF THE INVENTION

One special feature offered in mobile communications systems is group communication. Conventionally group communication has been available only in trunked mobile communications systems, such as Professional Radio or Private Mobile Radio (PMR) systems, such as TETRA (Terrestrial Trunked Radio), which are special radio systems primarily intended for professional and governmental users. The group communication is now becoming available also in public mobile communications systems. New packet-based group voice and data services are being developed for cellular networks, especially in the GSM/GPRS/UMTS network evolution.

The term "group", as used herein, refers to any logical group of two or more users for participating in the same group communication, e.g. a speech call. In the PMR systems, the members of the communication group often belong to the same organization, but in public mobile communications systems also private persons can establish their own communication groups. Naturally, the same user may be a member of more than one communication group.

The approaches adopted to cellular networks, especially to the GSM/GPRS/UMTS networks, are based on the idea that the group communication service is provided as a packet-based user or application level service so that the underlying cellular network only provides the basic connections between the (i.e. IP connections) group communications applications in the user terminals and the group communication service. The group communication services are typically provided as Voice over IP (VoIP) solution carried over GPRS/UMTS packet data network. The group communication application can then be implemented as a client-server solution, wherein the communication network provides a group communication server system while the group client applications reside in the user equipments or terminals. When this approach is employed for the push-to-talk communication, the concept is also referred to as a push-to-talk over cellular (PoC) network.

Generally, in group voice communication with a "push-to-talk, release-to-listen" feature, a group call is based on the use of a pressel (PTT, push-to-talk switch) in a telephone as a switch: by pressing a PTT the user indicates his desire to speak, and the user equipment sends a service request to the network. The network either rejects the request or allocates the requested resources on the basis of predetermined criteria, such as the availability of resources, priority of the requesting user, etc. At the same time, a connection is established also to all other active users in the specific subscriber group. After the voice connection has been established, the requesting user can talk and the other users can listen on the channel. When the user releases the PTT, the user equipment signals a release message to the network, and the resources are released. Thus, the resources are reserved only for the actual speech transaction or speech item, instead of reserving the resources for a "call".

All GSM/GPRS and UMTS mobile terminals currently available on the market are so-called class B or class C terminals, i.e. they are capable of having either a circuit-switched connection or a data packet connection active at a time, but they cannot be active simultaneously. During a circuit-switched voice call if a user wants to have a data connection, the circuit-switched connection is shifted to a non-active state and thereafter the data packet connection can be activated. Thus, it is not possible to transfer data, e.g. image or video files, and have a voice call connection at the same time.

US 2002/0089975 discloses a system in which an Internet switch box connected to an analogue (PSTN) telephone and a PSTN line. The Internet switch box is provided at subscriber premises to initiate an Internet connection establishment to change from an analogue PSTN call to an Internet based telephone call. The IP network connected by the switch box via an ISP comprises an ISB special server (ISBSS), which resolves the callers' IP addresses on the basis of telephone numbers. When the call participants agree to an IT call during the PSTN call, they both hang up the PSTN call. Then they pick up their telephones and dial a number of the ISP to connect the ISBSS. Then the corresponding IP addresses are determined and exchanged. When the calling parties have each other's IP addresses, the IT connection is opened to provide the speech call over the Internet connection.

WO 01/31963 discloses a method for providing handover from a GSM network to a GPRS service in a 3G network. The system comprises a handover server preparing the handover in the network. The handover may be triggered on the basis of an availability of a 3G network service, signal strength or a request for service requiring 3G coverage. The mobile terminal may be pre-registered to the 3G network.

US 2003/0187926 discloses an IP-based group communication service in a mobile communication network. The system applies GPRS architecture and a packet data protocol PDP context is established for each user node of a group. When IP-based voice traffic is targeted to a multicast IP address identifying the group, the IP-based voice traffic is relayed to user nodes over the PDP contexts.

### BRIEF DESCRIPTION OF THE INVENTION

An improved method and an apparatus for implementing the method have now been provided, which circumvent the above-stated drawback. Various aspects of the invention include a method, a telecommunications system and a subscriber device, which are characterized by what is stated in the independent claims. Various embodiments of the invention are disclosed in the dependent claims.

The invention is based on the idea of re-routing a circuit-switched call comprising, as participants, at least two subscriber devices of a communications system, said subscriber devices being capable of establishing a circuit-switched connection and a packet-switched connection via network elements of the communications system. In the method according to the invention, a circuit-switched call is established between said subscriber devices, and then a first subscriber device transmits a request for transferring said circuit-switched call to be carried via a group call established over a packet-switched connection. In a network element linking is created information for handing the said call over to a packet-switched connection, and in response to said subscriber devices and all relevant network elements having an appropriate information for establishing a packet-switched connection, a speech channel of said circuit-switched call is terminated. Next, a packet-switched connection is established between said subscriber devices, and then a group call is established over said packet-switched connection, whereby said subscriber devices are included in said group call on the basis of said linking information.

According to an embodiment, said linking information comprises a common identifier for identifying the circuit-switched connection and the packet-switched connection in said communications system.

According to an embodiment, the method further comprises establishing, in at least one of said subscriber devices, at least one further packet-switched connection, which is simultaneous with the packet-switched group call.

According to an embodiment, the method further comprises establishing said packet-switched connections via a GPRS network, and allocating said simultaneous packet-switched connections with separate PDP contexts.

According to an embodiment, the method further comprises establishing said packet-switched connections via a GPRS network, and allocating said simultaneous packet-switched connections with a common PDP context.

According to an embodiment, the method further comprises preparing initially a packet-switched group call connection in said communications system prior to establishing the packet-switched connection between said subscriber devices.

According to an embodiment, the method further comprises transmitting said request for call transfer by putting the voice call on hold, and transmitting the request for transfer on another speech channel as DTMF commands.

According to an embodiment, the method further comprises transmitting said request for call transfer on the speech channel of the active voice call by modifying DTMF commands of said request to be distinguishable from speech items of the voice call.

According to an embodiment, the method further comprises transmitting said request for call transfer as a short message (SMS).

According to an embodiment, the method further comprises transmitting said request for call transfer via a GPRS connection established before the set-up of the circuit-switched voice call connection for the delivery of presence information among the group call participants.

According to an embodiment, the method further comprises remaining appropriate call information and switching arrangements, except speech channel allocation, of said circuit-switched call connection in the communications system after the speech channel of said circuit-switched call has been terminated.

According to an embodiment, the method further comprises terminating said further packet-switched connections simultaneous with the packet-switched group call; a first subscriber device transmitting a request for transferring said packet-switched group call to be carried via a circuit-switched voice call; in response to said subscriber devices and all relevant network elements having an appropriate information for establishing a circuit-switched voice call, terminating said packet-switched group call; and establishing a circuit-switched voice call between said subscriber devices on the basis of said linking information.

According to an embodiment, the method further comprises carrying out a call set-up procedure of the circuit-switched voice call by the communications system as mobile-terminated call set-up towards all subscriber devices.

According to an embodiment, the method further comprises carrying out a call set-up procedure of the circuit-switched voice call by a subscriber device as mobile-originated call set-up towards the rest of the subscriber devices.

The invention and its embodiments provide various advantages. An advantage of the invention is that the incapability of the class B/C terminals of having a circuit-switched connection and a data packet connection active simultaneously is circumvented by using the PoC service for both a voice call connection and a data call connection. Since the GPRS data call allows several simultaneous IP connections, a separate IP flow can be created for a data transfer.

A further advantage is that the embodiments of the invention are equally applicable with class A terminals capable of having simultaneous circuit-switched and packet-switched connection, whereby the invention still provides remarkable advantages. In certain situations, even with class A terminals it is advisable to transfer the call to the PoC service and reserve the network capacity only when needed. A PoC voice call with occasional speech items is remarkably cheaper than having a circuit-switched connection on for a long time. Furthermore, the PS data transmit capacity of a class A terminal, and that of the network as well, typically increases, when the CS connection is switched off.

### BRIEF DESCRIPTION OF THE DRAWINGS

In the following the invention will be described in greater detail by means of preferred embodiments with reference to the attached drawings, in which
Figure 1 illustrates a general concept of a PoC network arrangement;
Figure 2 illustrates the PoC network functions more in detail in connection with a GSM/GPRS network;
Figure 3 is a signalling chart illustrating various embodiments of the invention; and
Figure 4 is a simplified block diagram of a subscriber device UT according to the invention.

### DETAILED DESCRIPTION OF THE INVENTION

The present invention is applicable to any packet-switched wireless network. The invention is particularly advantageous in cellular systems based on the GPRS-type packet radio service. The invention is also applicable in systems, wherein a part of data transfer, e.g. data transfer with the PoC communication system, is carried out via a circuit-switched connection. The preferable embodiments below are depicted using the GPRS packet radio service and the GSM or the UMTS systems as examples, without limiting the invention solely to these systems. Furthermore, Voice over IP (VolP) is only mentioned as an example of the IP-based voice communication methods applicable to the system.

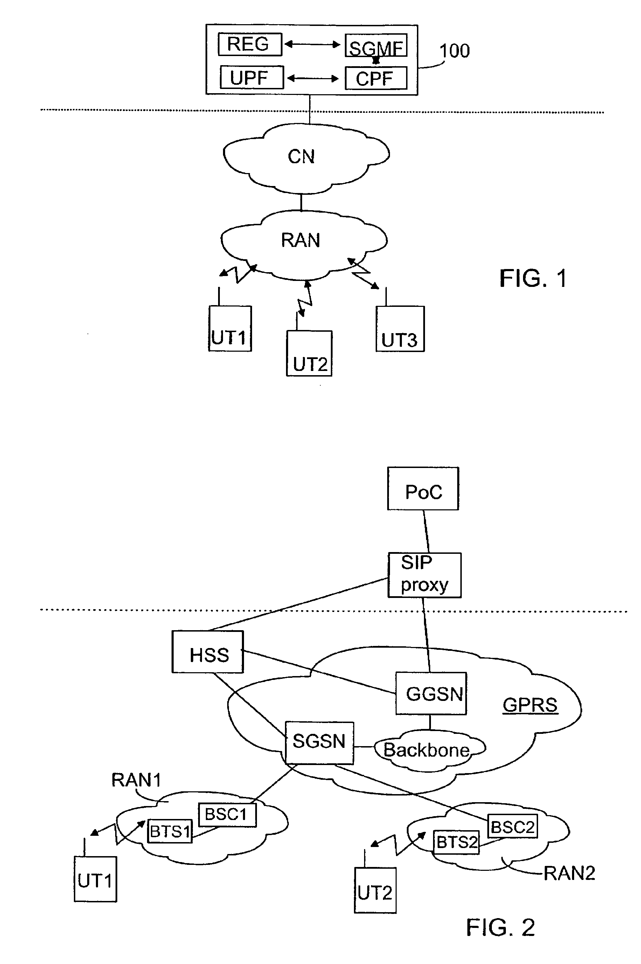

Figure 1 illustrates a general concept of a PoC network arrangement. In Figure 1, a packet based group communication system 100 having separated control-plane functions CPF and user-plane functions UPF is provided on top of the mobile network. The mobile network below comprises a core network CN and a radio access network RAN for offering radio connection for the user terminals UT1 - UT3. The cellular network may be based on any second or third or further generation mobile network, such as GSM/GPRS network or UMTS (3GPP) network. The radio access network RAN can also be implemented as a wireless local area network WLAN. The type and the structure of wireless network beneath the PoC network arrangement is, however, not essential for the implementation of the PoC service, as far as a packet data connection is available for the wireless network via the wireless network. Thus, any packet-switched wireless network can be used as a bearer service for the PoC service.

The group communication system 100 may be embodied as a server system comprising one or more servers. The subscriber communication directed to the server system is typically routed via a proxy, since the PoC service does not usually enable peer-to-peer communication between the terminals and the server(s). Conceptually, the group communication server system may comprise control-plane functions CPF and user-plane functions UPF providing packet mode server applications which communicate with the group communication client application(s) in the user terminals UT over the IP connections provided by the communication system. This communication includes signalling packets and voice or data communication packets.

The user-plane function(s) UPF is responsible for distribution of the data or speech packets to the user terminals according to their group memberships and other settings. The UPF forwards traffic only between valid connections programmed by the CPF. In case of speech communication, it may be based on voice over IP (VolP) protocol, and/or Real-time Transport Protocol, (RTP). It should be appreciated that the user-plane operation relating to the data or speech traffic is not relevant to the present invention. However, the basic operation typically includes that all the data or speech packet traffic from a sending user is routed to the UPF which then delivers the packet traffic to all receiving users in the group using a suitable technique, such as multicasting or multiple unicasting (multi-unicast).

The CPF function is responsible for control-plane management of the group communication. This may include, for example, managing the user activity and creation and deletion of logical user-plane connections with an appropriate control protocol, such as Session Initiation Protocol SIP. The user may also perform group attachment and group detachment with the CPF using control signalling, e.g. the SIP protocol. CPF also carries out user registration and authentication.

The group communication server system 100 may also include a subscriber and group management function (SGMF) for managing the subscriber and group data. It may also provide specific tools and interfaces needed for subscriber and group provisioning. The system 100 may also include a register REG for storing all provisioned data in the group communication system.

The group communication server system 100 may further include a presence service (PresS) functionality, which may be provided in the infrastructure side by means of a presence server PS. The user terminals, in turn, comprise the presence client applications. Typically, the presence service may be regarded as home environment service, wherein the home environment manages the presence information of users' devices, services and service media, even when roaming. The presence information is a set of attributes characterizing current properties of presence information providers such as status or an optional communication address. The presence information of a user's device may be delivered to other user devices within the communication group.

Figure 2 illustrates the above-mentioned functions more in detail in connection with a GSM/GPRS network. Figure 2 shows only some of the network elements of a GSM/GPRS network. The GSM/GPRS networks comprise a great number of other network elements as well, but appreciation of the invention does not require that these elements should be disclosed herewith.

Only two radio access networks RAN1 and RAN2 of the GSM network are shown in Figure 2. Each radio access network comprises at least one base station controller BSC and typically several base transceiver stations BTS connected to each base station controller BSC, the base station controller BSC controlling radio frequencies and channels of each base transceiver station BTS connected to it. User terminals UT of the mobile network are connected to at least one base transceiver station BTS via a radio frequency channel.

Base station controllers BSC, in turn, are connected both to the circuit-switched (CS) GSM core network and to the packet-switched (PS) GPRS network, only the latter being disclosed herewith more in detail. The GSM/GPRS and UMTS user terminals UT currently available on the market are so-called class B or class C terminals. Class B terminals may be attached to both packet-switched and circuit-switched services, but the terminal can only operate one set of services at a time. Class C terminals are attached to either packet-switched or circuit-switched services, allowing alternate use only.

The GPRS packet radio system can comprise several gateway nodes GGSN (Gateway GPRS Support Node) and serving nodes SGSN (Serving GPRS Support Node). Typically several serving nodes SGSN are connected to one gateway node GGSN. Both nodes SGSN and GGSN function as routers supporting the mobility of a mobile station, which routers control the mobile system and route data packets to mobile stations regardless of their location and the used protocol. The serving node SGSN is in contact with a user terminal UT through the radio network UTRAN. A task of the serving node SGSN is to detect mobile stations capable of packet radio connections in its service area, to transmit and receive data packets from said mobile stations and to track the location of the mobile stations in its service area. Records related to packet radio services and comprising subscriber-specific packet data protocol contents are also stored in the home subscriber server HSS.

The gateway node GGSN acts as a gateway between the GPRS packet radio system and the external data network PDN (Packet Data Network). External data networks include the UMTS or GPRS network of another network operator, the Internet, an X.25 network or a private local area network. The GGSN can also be connected directly to a private company network or to a host, like the PoC communication server system via the SIP proxy, as depicted in Fig. 2. Data packets being transmitted between the gateway node GGSN and the serving node SGSN are always encapsulated according to the gateway tunneling protocol GTP. The gateway node GGSN also contains PDP (Packet Data Protocol) addresses and routing information, i.e. SGSN addresses, of the mobile stations. The routing information is thus used to link the data packets between the external data network and the serving node SGSN. The network between the gateway node GGSN and the serving node SGSN employs an IP protocol (IPv4/IPv6, Internet Protocol, version 4/6).

The GSM/GPRS network, known as such, provides an IP-based communication infrastructure, above which the PoC service is implemented as data transfer between the PoC group communication server system and PoC client applications residing in the user terminals. The GGSN is connected to the PoC group communication server system via a SIP proxy, whereby the SIP proxy routes the VolP packets between the user terminals UT and the PoC group communication server system.

Now, according to an embodiment of the invention, the problem of incapability of the class B/C terminals of having a circuit-switched connection and a data packet connection active simultaneously is circumvented by using the PoC service for both a voice call connection and a data call connection. Now, if during a circuit-switched voice call a user wants to have a data connection, the PoC service is activated via the GPRS network and the voice call connection is transferred to the GPRS-based PoC service. Since the GPRS data call allows several simultaneous IP connections, a separate IP flow can be created for a data transfer. The simultaneous IP connections are preferably allocated separate PDP contexts, or they can be all transferred via a common PDP context (e.g. if the terminal only allows one PDP context at a time).

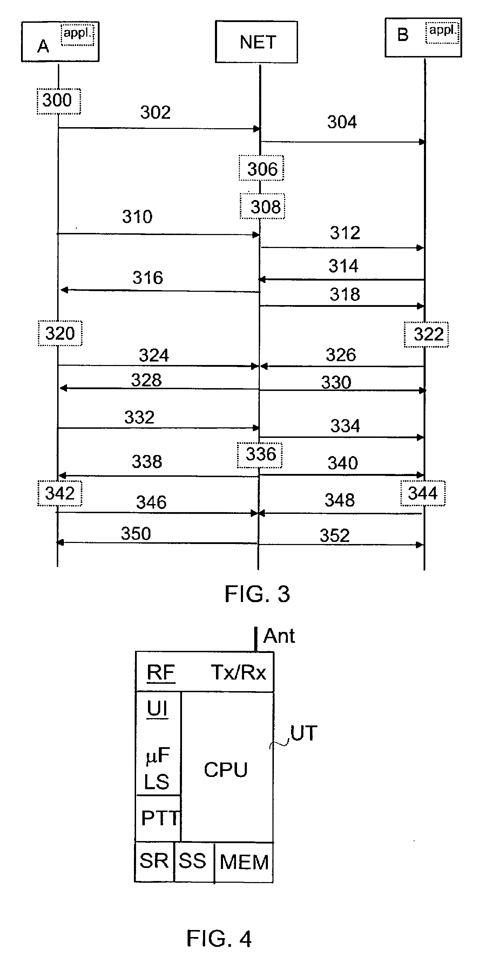

The implementation of the various embodiments of the invention will be further illustrated with reference to the signalling chart according to Fig. 3. For the sake of perspicuity, the invention will be illustrated only as one-to-one call between mobile subscribers A and B. The invention is, however, not limited to one-to-one connections, but it can be applied to PoC group communication as well. Furthermore, the terminals of the subscribers A and B comprise the PoC client applications modified according to the invention and the network arrangement (NET) of Fig. 3 includes a PoC group communication server system and a PoC server application modified according to the invention. The network arrangement (NET) of Fig. 3 can be, for example, the network arrangement of Fig. 2, and for the sake of perspicuity, its structure is not discussed herein more in detail.

First, the subscriber A initiates (300) a call set-up for a circuit-switched voice call connection. The call set-up may be initiated as an ordinary GSM call, whereby the PoC client application can be executed as background processing in the mobile terminal. Alternatively, the PoC client application may include a dedicated feature for a circuit-switched voice call set-up. The call set-up signalling (302) is transmitted to the network, which further inquires the availability of the subscriber B and in response to a positive acknowledgement, the network accomplishes the call set-up (304), after which the circuit-switched call connection is established. The above is only a simplification of the actual call set-up signalling, which is known as such, and the details of its implementation are not relevant for the embodiments of the invention.

During the call set-up, the network preferably checks (306) the subscriber numbers (e.g. MSISDN) of the subscribers A and B and retrieves from a database information, whether the subscribers and their terminals are registered to support the service according to the invention, i.e. the transfer of the voice call connection to be carried out as a GPRS-based PoC service. If both parties of the call support the function, a call ID is assigned (308) for the connection. The call ID may preferably be the same as used by the GSM network for identifying call connections, e.g. MSISDN and an ID for the call-related SIP signalling. According to an embodiment, the PoC server application located in the network may initially prepare a PoC session, which can then quickly be set up by the applications, when needed. The initial PoC session may be logically included in the same call ID.

Now during the established voice call, either the subscriber A or the subscriber B can initiate the call transfer to the PoC session, which is preferably carried out via the PoC client application. There are several options how the PoC client application can transmit the request for the call transfer.

According to an embodiment, the PoC client application may control the voice call to be put on hold, and then the request for transfer is transmitted on another speech channel connected to the network. The actual request may be transmitted as DTMF (Dual Tone Multi-Frequency) commands, for example.

According to another embodiment, the same speech channel is used for both the active voice call and for carrying the request for transfer. If the request is transmitted as DTMF commands, the commands may be filtered at the reception. The commands may also be modified for transmission on a frequency not disturbing the voice call, whereby also the volume and the duration of the DTMF commands may be distinguished from those of speech items of a voice call.

According to yet another embodiment, the PoC client application may send the request for transfer as a short message (SMS). The SMS may be a service-related SMS having a predefined structure, which is particularly designed for the PoC client and server applications and only readable by them. Thus, the SMS can be transmitted and actions relating to the request can be carried without any further user intervention by the sender or the recipient.

According to yet another embodiment, the request for transfer may be transmitted via a GPRS connection established before the set-up of the circuit-switched voice call connection for the delivery of presence information among the group call participants. In case of class B terminal, the GPRS connection may be shifted into inactive (idle) mode, when the CS voice call is set up, and voice call connection can then be temporarily suspended for the time to activate the GPRS context and transmit the request for transfer.

After the request for transfer is delivered to the network (310) and to the subscriber B (312) and the subscriber B preferably has acknowledged the request (314), then all parties of voice call are aware that voice call connection will be transferred to the PoC service. For that purpose, the PoC server application located in the network controls the GPRS network to activate a PDP context. The radio network RAN, which is controlled by a SGSN, allocates an downlink path, e.g. a dedicated packet data channel and a time slot in a frame, for the connection and the GPRS network establishes the needed PDP context. Then the initially prepared PoC session, already including the subscribers A and B and assigned for the call ID, may also be activated.

Next, the PoC server application provides (316, 318) the PoC client applications residing in the terminals with all necessary information (e.g. the call/PoC ID) for immediately opening the PoC session. The PoC client applications then control the terminals to switch off the circuit-switched voice call and to open immediately the PoC session (320, 322). The PoC client applications transmit a PoC session set-up request (324, 326) with the call/PoC ID to the PoC server application, whereby the correct PoC session is automatically activated (328, 330) on the basis of the call/PoC ID.

Now the PoC session is activated and the subscribers A and B may talk to each other over the PoC connection. However, it is now also possible to establish a simultaneous IP connection for transferring data. The subscribers A and B can now, for example, share documents or image files relating to the ongoing voice call. Similarly, the subscribers may establish a WWW or a WAP connection for browsing information in the Internet, while simultaneously continuing the voice call. Depending on the capabilities of the terminal, the simultaneous IP connections are preferably allocated separate PDP contexts. Providing the terminal is only capable of having one PDP context at a time, the simultaneous IP connections are transferred via a common PDP context.

When the subscribers notice that any data transfer connection is no longer needed, they can terminate the IP connections and continue the voice call via the PoC service. Alternatively, they can transfer the voice call back to the circuit-switched connection, if desired, e.g. due to better voice quality. The transfer from the PoC to the circuit-switched (e.g. GSM) connection is carried out in a similar manner as described above, when transferring from the CS to the PoC.

Either of the subscribers can initiate the call transfer to the circuit-switched connection, preferably by using the PoC client application. A request for transfer is sent (332) via the active GPRS context to the PoC server application, whereby the call/PoC ID is transmitted along. The request is forwarded (334) to the other subscriber such that all parties are aware that the PoC voice call will be transferred to a CS connection. The PoC server application recognizes (336), on the basis of the call/PoC ID, the request being associated with a prior voice call connection and instructs the network to prepare for a call set-up. The prior voice call connection may also have been "virtually" remained in the network such that all necessary information and switching arrangements of the prior voice call connection still exist in the network, except that a speech channel over the radio interface needs to be re-established.

The set-up of the speech channel towards to subscribers follows the procedure of a normal call set-up. However, according to an embodiment, the network starts the call set-up procedure to both subscribers at the same time such that both terminals see the procedure as a mobile-terminated call set-up. When the terminals receive the call set-up signalling (338, 340), the PoC client applications control (342, 344) the terminals either to terminate the GPRS connection (obligatory in class C terminals) or to switch the GPRS connection into inactive (idle) state (possible in class B terminals). The call set-up signalling sent by the network preferably includes an identifier, e.g. the subscriber number of the other subscriber, which enables the PoC client applications to answer automatically (346, 348), whereby the CS call is set up (350, 352) and the voice call connection is transferred automatically without any further user intervention.

Alternatively, according to another embodiment, the call set-up may be carried out such that, after all necessary information relating to call transfer has been delivered to all parties, either of the terminals starts the call set-up. Then the subscriber A (i.e. the terminal starting the call set-up) first terminates its GPRS connection or switches it into idle state, depending on the class type (B/C) of the terminal. The call set-up signalling sent by the subscriber A preferably includes the call/PoC ID, according to which the PoC server application recognizes the call and can then include an identifier, e.g. the subscriber number of the other subscriber, to the call set-up signalling to be sent to the subscriber B, which identifier enables the PoC client application of the subscriber B to answer the automatically. In response to the automatic answer, the CS call is set up between subscribers A and B and the voice call connection is transferred automatically from the PoC connection.

The embodiments of the invention have been described above starting from the technical limitations of the terminals, i.e. incapability of having simultaneous CS and PS connection (class B/C terminals). It is, however, notified that the embodiments of the invention are equally applicable with terminals capable of having simultaneous CS and PS connection (class A terminals), whereby the invention still provides remarkable advantages. For example, in situations wherein the parties of a call need to investigate some data, e.g. documents or images, and then repetitively comment the data to each other, it is not desirable to have circuit-switched connection on all the time, but it may be advisable to transfer the call to the PoC service and reserve the network capacity only when needed by pressing the PTT. A PoC voice call with occasional speech items is remarkably cheaper than having a circuit-switched connection on for a long time. Furthermore, the PS data transmit capacity of a class A terminal, and that of the network as well, typically increases, when the CS connection is switched off.

An example of a possible implementation of a subscriber device UT is illustrated in a simplified block diagram shown in Figure 4. The subscriber device UT comprises an RF part including a transceiver Tx/Rx for arranging radio frequency communication via the antenna ANT with a base transceiver station BTS of the network. User interface means UI typically comprise a display, a keyboard, a microphone (µF) and a loud speaker (LS). The subscriber device UT further comprises a memory MEM for storing computer program code to be executed by the central processing unit CPU. The speech item requests of the PoC service are controlled by the switch PTT (pressel), which can also be implemented as VAD (Voice Activity Detection).

For implementing the present invention, the subscriber device UT preferably comprises means for establishing a circuit-switched connection and a packet-switched connection via the mobile communications system; a talk group communication means for establishing a group call over the packet-switched connection, means for transmitting, after establishing a circuit-switched call to second subscriber device, a request for transferring said circuit-switched call to be carried via a group call established over a packet-switched connection; means for receiving, from the mobile communications system, an appropriate information for establishing a packet-switched connection, said information including linking information for handing the said call over to a packet-switched connection; means, responsive to receiving said information, for terminating said circuit-switched call; whereby the subscriber device is arranged to establish a packet-switched connection to said second subscriber device; and said talk group communication means are arranged to establish a group call over said packet-switched connection, whereby said subscriber device is arranged to transmit said linking information to the mobile communications system for including said subscriber device in said group call.

It should be appreciated that the blocks illustrated in Figure 4 are functional blocks that can be implemented in a variety of different circuit configurations. For example, the functions of the CPU may be distributed in a plurality of units. The operation according to the present invention is primarily related to the CPU part of the UT, and the basic invention may be implemented as program modifications in the control program of the UT, for example. It should also be appreciated that the present invention is not intended to be restricted to mobile stations and mobile systems but the terminal can be any terminal having a speech communication capability. For example, the user terminal may be a terminal (such as a personal computer PC) having Internet access and a VolP capability for voice communication over the Internet.

It will be obvious to a person skilled in the art that, as the technology advances, the inventive concept can be implemented in various ways. The invention and its embodiments are not limited to the examples described above but may vary within the scope of the claims.

## Claims

1. A method of re-routing a circuit-switched call comprising as participants at least two subscriber devices of a communications system, said subscriber devices being capable of establishing a circuit-switched connection and a packet-switched connection via network elements of the communications system, the method comprising
establishing (300-308) a circuit-switched call between said subscriber devices, **characterized by**
a first subscriber device of said subscriber devices transmitting (310) a request to a network element of the communications system for transferring said circuit-switched call to be carried via a group call established over a packet-switched connection;
informing a second subscriber device of said subscriber devices on the basis of the request for transferring said circuit-switched call to be carried via a group call;
creating in at least one network element linking information for handing the said call over to a packet-switched connection;
terminating (320, 322) a speech channel of said circuit-switched call when said said subscriber devices have an appropriate information for establishing a packet-switched connection;
establishing a packet-switched connection between said subscriber devices on the basis of group communications server control; and
establishing (324-330) a group call enabling communication between more than two participants over said packet-switched connection, whereby said subscriber devices are included in said group call on the basis of said linking information.

2. A method according to claim 1, **characterized by**
said linking information comprising a common identifier for identifying the circuit-switched connection and the packet-switched connection in said communications system.

3. A method according to claim 1 or 2, **characterized by** further comprising
establishing, in at least one of said subscriber devices, at least one further packet-switched connection, which is simultaneous with the packet-switched group call.

4. A method according to claim 3, **characterized by** further comprising
establishing said packet-switched connections via a GPRS network, and
allocating said simultaneous packet-switched connections with separate PDP contexts.

5. A method according to claim 3, **characterized by** further comprising
establishing said packet-switched connections via a GPRS network, and
allocating said simultaneous packet-switched connections with a common PDP context.

6. A method according to any preceding claim, **characterized by** further comprising
preparing initially a packet-switched group call connection in said communications system prior to establishing the packet-switched connection between said subscriber devices.

7. A method according to any preceding claim, **characterized by** further comprising
transmitting (310) said request for call transfer by putting the voice call on hold, and transmitting the request for transfer on another speech channel as DTMF commands.

8. A method according to any one of claims 1 - 6, **characterized by** further comprising
transmitting (310) said request for call transfer on the speech channel of the active voice call by modifying DTMF commands of said request to be distinguishable from speech items of the voice call.

9. A method according to any one of claims 1 - 6, **characterized by** further comprising
transmitting (310) said request for call transfer as a short message SMS.

10. A method according to any one of claims 1 - 6, **characterized by** further comprising
transmitting (310) said request for call transfer via a GPRS connection established before the set-up of the circuit-switched voice call connection for the delivery of presence information among the group call participants.

11. A method according to any preceding claim, **characterized by** further comprising
remaining an appropriate call information and switching arrangements, except speech channel allocation, of said circuit-switched call connection in the communications system after the speech channel of said circuit-switched call has been terminated.

12. A method according to any preceding claim, **characterized by** further comprising
terminating said further packet-switched connections simultaneous with the packet-switched group call;
a first subscriber device transmitting (332) a request for transferring said packet-switched group call to be carried via a circuit-switched voice call;
in response to said subscriber devices and all relevant network elements having an appropriate information for establishing a circuit-switched voice call, terminating (342, 344) said packet-switched group call; and
establishing (350, 352) a circuit-switched voice call between said subscriber devices on the basis of said linking information.

13. A method according to claim 12, **characterized by** further comprising
carrying out a call set-up procedure of the circuit-switched voice call by the communications system as mobile-terminated call set-up towards all subscriber devices.

14. A method according to claim 12, **characterized by** further comprising
carrying out a call set-up procedure of the circuit-switched voice call by a subscriber device as mobile-originated call set-up towards the rest of the subscriber devices.

15. A telecommunications system comprising a circuit-switched network part and a packet-switched network part and appropriate network elements for managing and interoperating said network parts, the system further comprising at least two subscriber devices capable of establishing a circuit-switched connection and a packet-switched connection via the telecommunications system, said packet-switched network part and said subscriber devices comprising means for establishing a group call over a packet-switched connection;
the circuit-switched network part being arranged (302-308) to establish a circuit-switched call between said subscriber devices, **characterized in that**
the circuit-switched network part is arranged to receive (310) from a first subscriber device of said subscriber devices a request for transferring said circuit-switched call to be carried via a group call established over a packet-switched connection;
at least one network element of the telecommunications system is arranged to inform a second subscriber device of said subscriber devices on the basis of the request for transferring said circuit-switched call to be carried via a group call;
at least one network element of the telecommunications system is arranged to create linking information for handing the said call over to a packet-switched connection;
in response to said subscriber devices and all relevant network elements having an appropriate information for establishing a packet-switched connection, the circuit-switched network part is arranged to terminate a speech channel of said circuit-switched call;
the packet-switched network part is arranged to establish a packet-switched connection between said subscriber devices on the basis of group communications server control; and
said packet-switched network part and said subscriber devices are arranged to establish (324-330) a group call enabling communications between more than two participants over said packet-switched connection, whereby said subscriber devices are included in said group call on the basis of said linking information.

16. A telecommunications system according to claim 15, **characterized in that**
said linking information comprises a common identifier for identifying the circuit-switched connection and the packet-switched connection in said communications system.

17. A telecommunications system according to claim 15 or 16, **characterized in that**
at least one of said subscriber devices is arranged to establish at least one further packet-switched connection, which is simultaneous with the packet-switched group call.

18. A telecommunications system according to claim 17, **characterized in that**
said subscriber device is arranged to establish said packet-switched connections via a GPRS network, and
said packet-switched network part is arranged to allocate said simultaneous packet-switched connections with separate PDP contexts.

19. A telecommunications system according to claim 17, **characterized in that**
said subscriber device is arranged to establish said packet-switched connections via a GPRS network, and
said packet-switched network part is arranged to allocate said simultaneous packet-switched connections with a common PDP context.

20. A telecommunications system according to any one of the claims 15 -19, **characterized in that**
the circuit-switched network part is arranged to remain an appropriate call information and switching arrangements, except speech channel allocation, of said circuit-switched call connection in the communications system after the speech channel of said circuit-switched call has been terminated.

21. A telecommunications system according to any one of the claims 15-20, **characterized in that**
said subscriber device is arranged to terminate said further packet-switched connections simultaneous with the packet-switched group call;
a first subscriber device is arranged to transmit (332) a request for transferring said packet-switched group call to be carried via a circuit-switched voice call;
in response to said subscriber devices and all relevant network elements having an appropriate information for establishing a circuit-switched voice call, said packet-switched network part is arranged to terminate (342, 344) said packet-switched group call; and
the circuit-switched network part is arranged to establish (350, 352) a circuit-switched voice call between said subscriber devices on the basis of said linking information.

22. A subscriber device for a mobile communication system, comprising
means for establishing a circuit-switched connection (300) and a packet-switched connection via the mobile communications system;
a talk group communication means for establishing a group call over the packet-switched connection, **characterized in that** said subscriber device further comprises
means for transmitting (310), after establishing a circuit-switched call to a second subscriber device, a request for transferring said circuit-switched call to be carried via a group call established over a packet-switched connection;
means for receiving, from the mobile communications system, an appropriate information for establishing a packet-switched connection, said information including linking information for handing the said call over to a packet-switched connection;
means, responsive to receiving said information, for terminating (320) said circuit-switched call; whereby
the subscriber device is arranged to establish a packet-switched connection to said second subscriber device; and
said talk group communication means are arranged to establish (324) a group call over said packet-switched connection, whereby said subscriber device is arranged to transmit said linking information to the mobile communications system for including said subscriber device in said group call.

23. A subscriber device according to claim 22, **characterized in that** said linking information comprising a common identifier for identifying the circuit-switched connection and the packet-switched connection in said communications system.

24. A subscriber device according to claim 22 or 23, **characterized in that**
the subscriber device is arranged to establish at least one further packet-switched connection, which is simultaneous with the packet-switched group call.

25. A subscriber device according to claim 24, **characterized in that** the subscriber device is arranged
to establish said packet-switched connections via a GPRS network, and
to receive from communications system an allocation of separate PDP contexts for said simultaneous packet-switched connections.

26. A subscriber device according to claim 24, **characterized in that** the subscriber device is arranged
to establish said packet-switched connections via a GPRS network, and
to receive from communications system an allocation of a common PDP context for said simultaneous packet-switched connections.

27. A subscriber device according to any one of claims 22 - 26, **characterized in that** the subscriber device is arranged to
transmit (310) said request for call transfer by putting the voice call on hold, and transmitting the request for transfer on another speech channel as DTMF commands.

28. A subscriber device according to any one of claims 22 - 26, **characterized in that** the subscriber device is arranged to
transmit (310) said request for call transfer on the speech channel of the active voice call by modifying DTMF commands of said request to be distinguishable from speech items of the voice call.

29. A subscriber device according to any one of claims 22 - 26, **characterized in that** the subscriber device is arranged to
transmit (310) said request for call transfer as a short message (SMS).

30. A subscriber device according to any one of claims 22 - 26, **characterized in that** the subscriber device is arranged to
transmit (310) said request for call transfer via a GPRS connection established before the set-up of the circuit-switched voice call connection for the delivery of presence information among the group call participants.

31. A subscriber device according to any one of claims 22 - 30, **characterized in that** the subscriber device is arranged to
terminate said further packet-switched connections simultaneous with the packet-switched group call;
transmit (332) a request for transferring said packet-switched group call to be carried via a circuit-switched voice call;
receive (338, 340), from the mobile communications system, an appropriate information for establishing a circuit-switched connection;
terminate, in response to receiving said information, said packet-switched group call; and
establish (350, 352) a circuit-switched voice call to said second subscriber device on the basis of said linking information.

32. A subscriber device according to claim 31, **characterized in that** the subscriber device is arranged to
receive mobile-terminated call set-up signalling of a circuit-switched voice call from the communications system.

33. A subscriber device according to claim 31, **characterized in that** the subscriber device is arranged to
transmit mobile-terminated call set-up signalling of a circuit-switched voice call towards the other subscriber devices.

## Patentansprüche

1. Verfahren zum Umleiten eines leitungsvermittelten Rufs, der als Teilnehmer mindestens zwei Teilnehmervorrichtungen eines Kommunikationssystems aufweist, wobei die Teilnehmervorrichtungen im Stande sind, eine leitungsvermittelte Verbindung und eine paketvermittelte Verbindung über Netzelemente des Kommunikationssystems zu bilden, wobei das Verfahren aufweist
Bilden (300 bis 308) eines leitungsvermittelten Rufs zwischen den Teilnehmervorrichtungen, ***gekennzeichnet durch***
eine erste Teilnehmervorrichtung der Teilnehmervorrichtungen, die eine Anforderung zu einem Netzelement des Kommunikationssystems zum Senden des leitungsvermittelten Rufs sendet (310), um über einen Gruppenruf übertragen zu werden, der über eine paketvermittelte Verbindung gebildet ist;
Unterrichten einer zweiten Teilnehmervorrichtung der Teilnehmervorrichtungen auf der Grundlage der Anforderung zum Senden des leitungsvermittelten Rufs, der über einen Gruppenruf zu übertragen ist;
Erzeugen mindestens einer Netzelement-Verknüpfungsinformation zum Handhaben des Rufs über eine paketvermittelte Verbindung;
Abbauen (320, 322) eines Sprachkanals des leitungsvermittelten Rufs, wenn die Teilnehmervorrichtungen eine zweckmäßige Information zum Bilden einer paketvermittelten Verbindung aufweisen;
Bilden einer paketvermittelten Verbindung zwischen den Teilnehmervorrichtungen auf der Grundlage eines Gruppenkommunikations-Serversteuerns; und
Bilden (324 bis 330) eines Gruppenrufs, der eine Kommunikation zwischen mehr als zwei Teilnehmern zulässt, über die paketvermittelte Verbindung, wodurch die Teilnehmervorrichtungen auf der Grundlage der Verknüpfungsinformation in dem Gruppenruf beinhaltet sind.

2. Verfahren nach Anspruch 1, ***gekennzeichnet durch***
die Verknüpfungsinformation, die eine gemeinsame Kennung zum Kennzeichnen der leitungsvermittelten Verbindung und der paketvermittelten Verbindung in dem Kommunikationssystem aufweist.

3. Verfahren nach Anspruch 1 oder 2, ***gekennzeichnet durch*** weiteres Aufweisen
eines Bildens mindestens einer weiteren paketvermittelten Verbindung, welche gleichzeitig zu dem paketvermittelten Gruppenruf ist, in mindestens einer der Teilnehmervorrichtungen.

4. Verfahren nach Anspruch 3, ***gekennzeichnet durch*** weiteres Aufweisen
eines Bildens der paketvermittelten Verbindungen über ein GPRS-Netz, und
eines Zuweisens der gleichzeitigen paketvermittelten Verbindungen zu getrennten PDP-Kontexten.

5. Verfahren nach Anspruch 3, ***gekennzeichnet durch*** weiteres Aufweisen
eines Bildens der paketvermittelten Verbindungen über ein GPRS-Netz, und
eines Zuweisens der gleichzeitigen paketvermittelten Verbindungen zu einem gemeinsamen PDP-Kontext.

6. Verfahren nach einem der vorhergehenden Ansprüche, ***gekennzeichnet durch*** weiteres Aufweisen
eines anfänglichen Vorbereitens einer paketvermittelten Gruppenrufverbindung in dem Kommunikationssystem vor einem Bilden der paketvermittelten Verbindung zwischen den Teilnelmervorrichtungen.

7. Verfahren nach einem der vorhergehenden Ansprüche, ***gekennzeichnet durch*** weiteres Aufweisen
eines Sendens (310) der Anforderung nach einem Senden eines Rufs **durch** Setzen des Sprachrufs in eine Wartestellung und eines Sendens der Anforderung zum Senden auf einem anderen Sprachkanal als DTMF-Anweisungen.

8. Verfahren nach einem der Ansprüche 1 bis 6, ***gekennzeichnet durch*** weiteres Aufweisen
eines Sendens (310) der Anforderung nach einem Senden eines Rufs auf dem Sprachkanal des aktiven Sprachrufs **durch** Ändern von DTMF-Anweisungen der Anforderung, um von Sprachelementen des Sprachrufs unterscheidbar zu sein.

9. Verfahren nach einem der Ansprüche 1 bis 6, ***gekennzeichnet durch*** weiteres Aufweisen
eines Sendens (310) der Anforderung nach einem Senden eines Rufs als eine Kurznachricht-SMS.

10. Verfahren nach einem der Ansprüche 1 bis 6, ***gekennzeichnet durch*** weiteres Aufweisen
eines Sendens (310) der Anforderung nach einem Senden eines Rufs über eine GPRS-Verbindung, die vor dem Aufbauen der leitungsvermittelten Sprachrufverbindung für das Übermitteln einer Vorhandenseinsinformation aus den Gruppenruftteilnehmern gebildet wird.

11. Verfahren nach einem der vorhergehenden Ansprüche, ***gekennzeichnet durch*** weiteres Aufweisen
eines Belassens einer zweckmäßigen Rufinformation und von Vermittlungsanordnungen, außer einer Sprachkanalzuweisung, der leitungsvermittelten Rufverbindung in dem Kommunikationssystem, nachdem der Sprachkanal des leitungsvermittelten Rufs abgebaut worden ist.

12. Verfahren nach einem der vorhergehenden Ansprüche, ***gekennzeichnet durch*** weiteres Aufweisen
eines Abbauens der weiteren paketvermittelten Verbindungen gleichzeitig zu dem paketvermittelten Gruppenruf;
einer ersten Teilnehmervorrichtung, die eine Anforderung zum Senden des paketvermittelten Gruppenrufs sendet (332), der über einen leitungsvermittelten Sprachruf zu übertragen ist;
eines Abbauens (342, 344) des paketvermittelten Gruppenrufs als Reaktion auf die Teilnehmervorrichtungen und alle betreffenden Netzelemente, die eine zweckmäßige Information zum Bilden eines leitungsvermittelten Sprachrufs aufweisen; und
eines Bildens (350, 352) eines leitungsvermittelten Sprachrufs zwischen den Teilnehmervorrichtungen auf der Grundlage der Verknüpfungsinformation.

13. Verfahren nach Anspruch 12, ***gekennzeichnet durch*** weiteres Aufweisen
eines Ausführens eines Rufaufbauverfahrens des leitungsvermittelten Sprachrufs durch das Kommunikationssystem als einen mobil ankommenden Rufaufbau zu allen Teilnehmervorrichtungen.

14. Verfahren nach Anspruch 12, ***gekennzeichnet durch*** weiteres Aufweisen
eines Ausführens eines Rufaufbauverfahrens des leitungsvermittelten Sprachrufs durch eine Teilnehmervorrichtung als einen mobil abgehenden Rufaufbau zu dem Rest der Teilnehmervorrichtungen.

15. Telekommunikationssystem, das ein Leitungsvermittlungsnetzeil und ein Paketvermittlungsnetzteil und zweckmäßige Netzelemente zum Verwalten und zusammen Betreiben der Netzteile aufweist, wobei das System weiterhin mindestens zwei Teilnehmervorrichtungen aufweist, die im Stande sind, eine leitungsvermittelte Verbindung und eine paketvermittelte Verbindung über das Telekommunikationssystem zu bilden, wobei das Paketvermittlungsnetzteil und die Teilnehmervorrichtungen eine Einrichtung zum Bilden eines Gruppenrufs über eine paketvermittelte Verbindung aufweisen;
wobei das Leitungsvermittlungsnetzteil dazu vorgesehen ist (302 bis 308), einen leitungsvermittelten Ruf zwischen den Teilnehmervorrichtungen zu bilden, ***dadurch gekennzeichnet, dass***
das Leitungsvermittlungsnetzteil dazu vorgesehen ist, von einer ersten Teilnehmervorrichtung der Teilnehmervorrichtungen eine Anforderung zum Senden des leitungsvermittelten Rufs zu empfangen (310), der über einen Gruppenruf zu übertragen ist, der über eine paketvermittelte Verbindung gebildet wird;
mindestens ein Netzelement des Telekommunikationssystems dazu vorgesehen ist, eine zweite Teilnehmervorrichtung der Teilnehmervorrichtungen auf der Grundlage der Anforderung zum Senden des leitungsvermittelten Rufs zu unterrichten, der über einen Gruppenruf zu übertragen ist;
mindestens ein Netzelement des Telekommunikationsnetzes dazu vorgesehen ist, eine Verknüpfungsinformation zum Handhaben des Rufs über eine paketvermittelte Verbindung zu bilden;
das Leitungsvermittlungsnetzteil dazu vorgesehen ist, als Reaktion auf die Teilnehmervorrichtungen und alle betreffenden Netzelemente, die eine zweckmäßige Information zum Bilden einer paketvermittelten Verbindung aufweisen, einen Sprachkanal des leitungsvermittelten Rufs abzubauen;
das Paketvermittlungsnetzteil dazu vorgesehen ist, eine paketvermittelte Verbindung zwischen den Teilnehmervorrichtungen auf der Grundlage eines Gruppenkommunikations-Serversteuerns zu bilden; und
das Paketvermittlungsnetzteil und die Teilnehmervorrichtungen dazu vorgesehen sind, einen Gruppenruf, der eine Kommunikation zwischen mehr als zwei Teilnehmern zulässt, über die paketvermittelte Verbindung zu bilden (324 bis 330), wodurch die Teilnehmervorrichtungen auf der Grundlage der Verknüptungsinformation in dem Gruppenruf beinhaltet sind.

16. Telekommunikationssystem nach Anspruch 15, ***dadurch gekennzeichnet, dass***
die Verknüpfungsinformation eine gemeinsame Kennung zum Kennzeichnen der leitungsvermittelten Verbindung und der paketvermittelten Verbindung in dem Kommunikationssystem aufweist.

17. Telekommunikationssystem nach Anspruch 15 oder 16, ***dadurch gekennzeichnet, dass***
mindestens eine der Teilnehmervorrichtungen dazu vorgesehen ist, mindestens eine weitere paketvermittelte Verbindung zu bilden, welche gleichzeitig zu dem paketvermittelten Gruppenruf ist.

18. Telekommunikationssystem nach Anspruch 17, ***dadurch gekennzeichnet, dass***
die Teilnehmervorrichtung dazu vorgesehen ist, die paketvermittelten Verbindungen über ein GPRS-Netz zu bilden, und
das Paketvermittlungsnetzteil dazu vorgesehen ist, den gleichzeitigen paketvermittelten Verbindungen getrennte PDP-Kontexte zuzuweisen.

19. Telekommunikationssystem nach Anspruch 17, ***dadurch gekennzeichnet, dass***
die Teilnehmervorrichtung dazu vorgesehen ist, die paketvermittelten Verbindungen über ein GPRS-Netz zu bilden, und
das Paketvermittlungsnetzteil dazu vorgesehen ist, den gleichzeitigen paketvermittelten Verbindungen einen gemeinsamen PDP-Kontext zuzuweisen.

20. Telekommunikationssystem nach einem der Ansprüche 15 bis 19, ***dadurch gekennzeichnet, dass***
das Leitungsvermittlungsnetzteil dazu vorgesehen ist, eine zweckmäßige Rufinformation und Vermittlungsanordnungen, außer einer Sprachkanalzuweisung, der leitungsvermittelten Rufverbindung in dem Kommunikationssystem zu belassen, nachdem der Sprachkanal des leitungsvermittelten Rufs abgebaut worden ist.

21. Telekommunikationssystem nach einem der Ansprüche 15 bis 20, ***dadurch gekennzeichnet, dass***
die Teilnehmervorrichtung dazu vorgesehen ist, die weiteren paketvermittelten Verbindungen gleichzeitig zu dem paketvermittelten Gruppenruf abzubauen;
eine erste Teilnehmervorrichtung dazu vorgesehen ist, eine Anforderung zum Senden des paketvermittelten Gruppenrufs zu senden (332), der über einen leitungsvermittelten Sprachruf zu übertragen ist;
das Paketvermittlungsnetzteil dazu vorgesehen ist, als Reaktion auf die Teilnehmervorrichtungen und alle betreffenden Netzelemente, die eine zweckmäßige Information zum Bilden eines leitungsvermittelten Sprachrufs aufweisen, den paketvermittelten Gruppenruf abzubauen (342, 344); und
das Leitungsvermittlungsnetzteil dazu vorgesehen ist, einen leitungsvermittelten Sprachruf zwischen den Teilnehmervorrichtungen auf der Grundlage der Verknüpfungsinformation zu bilden (350, 352).

22. Teilnehmervorrichtung für ein mobiles Kommunikationssystem, die aufweist
eine Einrichtung zum Bilden einer leitungsvermittelten Verbindung (300) und einer paketvermittelten Verbindung über das mobile Kommunikationssystem;
eine Gesprächsgruppen-Kommunikationseinrichtung zum Bilden eines Gruppenrufs über die paketvermittelte Verbindung, ***dadurch gekennzeichnet, dass*** die Teilnehmervorrichtung weiterhin aufweist
eine Einrichtung zum Senden (310) einer Anforderung zum Senden des leitungsvermittelten Rufs, der über einen Gruppenruf zu übertragen ist, der über eine paketvermittelte Verbindung gebildet wird, nach einem Bilden eines leitungsvermittelten Rufs zu einer zweiten Teilnehmervorrichtung;
einer Einrichtung zum Empfangen einer zweckmäßigen Information zum Bilden einer paketvermittelten Verbindung von dem mobilen Kommunikationssystem, wobei die Information eine Verknüpfungsinformation zum Handhaben des Rufs über eine paketvermittelte Verbindung aufweist;
eine Einrichtung zum Abbauen (320) des leitungsvermittelten Rufs als Reaktion auf ein Empfangen der Information; wodurch
die Teilnehmervorrichtung dazu vorgesehen ist, eine paketvermittelte Verbindung zu der zweiten Teilnehmervorrichtung zu bilden; und
die Gesprächsgruppen-Kommunikationseinrichtung dazu vorgesehen ist, einen Gruppenruf über die paketvermittelte Verbindung zu bilden (324), wodurch die Teilnehmervorrichtung dazu vorgesehen ist, die Veeknüpfungsinformation zum Beinhalten der Teilnehmervorrichtung in dem Gruppenruf zu dem mobilen Kommunikationssystem zu senden.

23. Teilnehmervorrichtung nach Anspruch 22, ***dadurch gekennzeichnet, dass***
die Verknüpfungsinformation eine gemeinsame Kennung zum Kennzeichnen der leitungsvermittelten Verbindung und der paketvermittelten Verbindung in dem Kommunikationssystem aufweist.

24. Teilnehmervorrichtung nach Anspruch 22 oder 23, ***dadurch gekennzeichnet, dass***
die Teilnehmervorrichtung dazu vorgesehen ist, mindestens eine weitere paketvermittelte Verbindung zu bilden, welche gleichzeitig zu dem paketvermittelten Gruppenruf ist.

25. Teilnehmervorrichtung nach Anspruch 24, ***dadurch gekennzeichnet, dass*** die Teilnehmervorrichtung dazu vorgesehen ist,
die paketvermittelten Verbindungen über ein GPRS-Netz zu bilden, und
von dem Kommunikationssystem eine Zuweisung von getrennten PDP-Kontexten für die gleichzeitigen paketvermittelten Verbindungen zu empfangen.

26. Teilnehmervorrichtung nach Anspruch 24, ***dadurch gekennzeichnet, dass*** die Teilnehmervorrichtung dazu vorgesehen ist,
die paketvermittelten Verbindungen über ein GPRS-Netz zu bilden, und
von dem Kommunikationssystem eine Zuweisung eines gemeinsamen PDP-Kontexts für die gleichzeitigen paketvermittelten Verbindungen zu empfangen.

27. Teilnehmervorrichtung nach einem der Ansprüche 22 bis 26, ***dadurch gekennzeichnet, dass*** die Teilnehmervorrichtung dazu vorgesehen ist,
die Anforderung nach einem Senden eines Rufs durch Setzen des Sprachrufs in eine Wartestellung zu senden (310) und die Anforderung zum Senden auf einem anderen Sprachkanal als DTMF-Anweisungen zu senden.

28. Teilnehmervorrichtung nach einem der Ansprüche 22 bis 26, ***dadurch gekennzeichnet, dass*** die Teilnehmervorrichtung dazu vorgesehen ist,
die Anforderung nach einem Senden eines Rufs auf dem Sprachkanal des aktiven Sprachrufs durch Ändern von DTMF-Anweisungen der Anforderung zu senden (310), um von Sprachelementen des Sprachrufs unterscheidbar zu sein.

29. Teilnehmervorrichtung nach einem der Ansprüche 22 bis 26, ***dadurch gekennzeichnet, dass*** die Teilnehmervorrichtung dazu vorgesehen ist,
die Anforderung nach einem Senden eines Rufs als eine Kurznachricht (SMS) zu senden.

30. Teilnehmervorrichtung nach einem der Ansprüche 22 bis 26, ***dadurch gekennzeichnet, dass*** die Teilnehmervorrichtung dazu vorgesehen ist,
die Anforderung nach einem Senden eines Rufs über eine GPRS-Verbindung zu senden (310), die vor dem Aufbauen der leitungsvermittelten Sprachrufverbindung für das Übermitteln einer Vorhandenseinsinformation aus den Gruppenruftteilnehmern gebildet wird.

31. Teilnehmervorrichtung nach einem der Ansprüche 22 bis 30, ***dadurch gekennzeichnet, dass*** die Teilnehmervorrichtung dazu vorgesehen ist,
die weiteren paketvermittelten Verbindungen gleichzeitig zu dem paketvermittelten Gruppenruf abzubauen;
eine Anforderung zum Senden des paketvermittelten Gruppenrufs zu senden (332), der über einen leitungsvermittelten Sprachruf zu übertragen ist;
von dem Kommunikationssystem eine zweckmäßige Information zum Bilden einer leitungsvermittelten Verbindung zu empfangen (338, 340);
den paketvermittelten Gruppenruf als Reaktion auf die Information abzubauen; und
einen leitungsvermittelten Sprachruf zu der zweiten Teilnehmervorrichtung auf der Grundlage der Verknüpfungsinformation zu bilden (350, 352).

32. Teilnehmervorrichtung nach Anspruch 31, ***dadurch gekennzeichnet, dass*** die Teilnehmervorrichtung dazu vorgesehen ist,
einen mobil ankommenden Rufaufbau, der einen leitungsvermittelten Sprachruf signalisiert, von dem Kommunikationssystem zu empfangen.

33. Teilnehmervorrichtung nach Anspruch 31, ***dadurch gekennzeichnet, dass*** die Teilnehmervorrichtung dazu vorgesehen ist,
einen mobil abgehenden Rufaufbau, der einen leitungsvermittelten Sprachruf signalisiert, zu den anderen Teilnehmervorrichtungen zu senden.

## Revendications

1. Procédé de réacheminement d'un appel à commutation de circuits comprenant en tant que participants au moins deux dispositifs abonnés d'un système de communications, lesdits dispositifs abonnés étant capables d'établir une connexion à commutation de circuits et une connexion à commutation de paquets par l'intermédiaire d'éléments de réseau du système de communications, le procédé comprenant l'étape consistant à :
établir (300-308) un appel à commutation de circuits entre lesdits dispositifs abonnés, **caractérisé par** :
la transmission (310) par un premier dispositif abonné desdits dispositifs abonnés d'une demande à un élément de réseau du système de communications de transfert dudit appel à commutation de circuits pour qu'il soit transporté par l'intermédiaire d'un appel de groupe établi sur une connexion à commutation de paquets ;
l'information d'un second dispositif abonné desdits dispositifs abonnés sur la base de la demande de transfert dudit appel à commutation de circuits pour qu'il soit transporté par l'intermédiaire d'un appel de groupe ;
la création dans au moins un élément de réseau d'informations d'interconnexion pour transférer ledit appel à une connexion à commutation de paquets ;
la terminaison (320,322) d'une voie de conversation dudit appel à commutation de circuits lorsque lesdits dispositifs abonnés possèdent des informations appropriées pour établir une connexion à commutation de paquets ;
l'établissement d'une connexion à commutation de paquets entre lesdits dispositifs abonnés sur la base de contrôle de serveur de communications de groupe ; et
l'établissement (324-330) d'un appel de groupe permettant des communications entre plus de deux participants sur ladite connexion à commutation de paquets, moyennant quoi lesdits dispositifs abonnés sont inclus dans ledit appel de groupe sur la base desdites informations d'interconnexion.

2. Procédé selon la revendication 1, **caractérisé en ce que** lesdites informations d'interconnexion comprennent un identifiant commun pour identifier la connexion à commutation de circuits et la connexion à commutation de paquets dans ledit système de communications.

3. Procédé selon la revendication 1 ou 2, **caractérisé en ce qu'**il comprend en outre l'étape consistant à :
établir, dans au moins un desdits dispositifs abonnés, au moins une connexion à commutation de paquets supplémentaire, qui est simultanée avec l'appel de groupe à commutation de paquets.

4. Procédé selon la revendication 3, **caractérisé en ce qu'**il comprend en outre les étapes consistant à:
établir lesdites connexions à commutation de paquets par l'intermédiaire d'un réseau GPRS, et
attribuer lesdites connexions à commutation de paquets simultanées avec des contextes PDP séparés.

5. Procédé selon la revendication 3, **caractérisé en ce qu'**il comprend en outre les étapes consistant à :
établir lesdites connexions à commutation de paquets par l'intermédiaire d'un réseau GPRS, et
attribuer lesdites connexions à commutation de paquets simultanées avec un contexte PDP commun.

6. Procédé selon une quelconque revendication précédente, **caractérisé en ce qu'**il comprend en outre l'étape consistant à :
préparer initialement une connexion d'appel de groupe à commutation de paquets dans ledit système de communications avant d'établir la connexion à commutation de paquets entre lesdits dispositifs abonnés.

7. Procédé selon une quelconque revendication précédente, **caractérisé en ce qu'**il comprend en outre l'étape consistant à :
transmettre (310) ladite demande de transfert d'appel en mettant l'appel vocal en attente, et transmettre la demande de transfert sur une autre voie de conversation sous forme des commandes DTMF.

8. Procédé selon l'une quelconque des revendications 1 à 6, **caractérisé en ce qu'**il comprend en outre l'étape consistant à :
transmettre (310) ladite demande de transfert d'appel sur la voie de conversation de l'appel vocal actif en modifiant des commandes DTMF de ladite demande pour pouvoir être distinguées d'articles de conversation de l'appel vocal.

9. Procédé selon l'une quelconque des revendications 1 à 6, **caractérisé en ce qu'**il comprend en outre l'étape consistant à :
transmettre (310) ladite demande de transfert d'appel sous forme de message SMS.

10. Procédé selon l'une quelconque des revendications 1 à 6, **caractérisé en ce qu'**il comprend en outre l'étape consistant à :
transmettre (310) ladite demande de transfert d'appel par l'intermédiaire d'une connexion GPRS établie avant l'établissement de la connexion d'appel vocal à commutation de circuits pour la livraison d'informations de présence parmi les participants d'appel de groupe.

11. Procédé selon une quelconque revendication précédente, **caractérisé en ce qu'**il comprend en outre l'étape consistant à :
laisser des informations d'appel appropriées et agencements de commutation, à l'exception de l'attribution de voie de conversation, dudit appel à commutation de circuits connexion dans le système de communications après que la voie de conversation dudit appel à commutation de circuits a été terminée.

12. Procédé selon une quelconque revendication précédente, **caractérisé en ce qu'**il comprend en outre les étapes consistant à :
terminer lesdites connexions à commutation de paquets supplémentaires simultanées avec l'appel de groupe à commutation de paquets ;
un premier dispositif abonné transmettant (332) une demande de transfert dudit appel de groupe à commutation de paquets pour qu'il soit transporté par l'intermédiaire d'un appel vocal à commutation de circuits ;
en réponse audits dispositifs abonnés et tous les éléments de réseau pertinents possédant des informations appropriées pour établir un appel vocal à commutation de circuits, terminer (342, 344) ledit appel de groupe à commutation de paquets ; et
établir (350, 352) un appel vocal à commutation de circuits entre lesdits dispositifs abonnés sur la base desdites informations d'interconnexion.

13. Procédé selon la revendication 12, **caractérisé en ce qu'**il comprend en outre l'étape consistant à :
exécuter une procédure d'établissement d'appel de l'appel vocal à commutation de circuits par l'intermédiaire du système de communications en tant qu'établissement d'appel terminé mobile vers tous les dispositifs abonnés.

14. Procédé selon la revendication 12, **caractérisé en ce qu'**il comprend en outre l'étape consistant à :
exécuter une procédure d'établissement d'appel de l'appel vocal à commutation de circuits par l'intermédiaire d'un dispositif abonné en tant qu'établissement d'appel d'origine mobile vers le reste des dispositifs abonnés.

15. Système de télécommunications comprenant une partie de réseau à commutation de circuits et une partie de réseau à commutation de paquets et des éléments de réseau appropriés pour gérer et inter-actionner lesdites parties de réseau, le système comprenant en outre au moins deux dispositifs abonnés capables d'établir une connexion à commutation de circuits et une connexion à commutation de paquets par l'intermédiaire du système de télécommunications, ladite partie de réseau à commutation de paquets et lesdits dispositifs abonnés comprenant des moyens pour établir un appel de groupe sur une connexion à commutation de paquets ;
la partie de réseau à commutation de circuits étant agencée (302-308) pour établir un appel à commutation de circuits entre lesdits dispositifs abonnés, **caractérisé en ce que** :
la partie de réseau à commutation de circuits est agencée pour recevoir (310) à partir d'un premier dispositif abonné desdits dispositifs abonnés une demande de transfert dudit appel à commutation de circuits pour qu'il soit transporté par l'intermédiaire d'un appel de groupe établi sur une connexion à commutation de paquets ;
au moins un élément de réseau du système de télécommunications est agencé pour informer un second dispositif abonné desdits dispositifs abonnés sur la base de la demande de transfert dudit appel à commutation de circuits pour qu'il soit transporté par l'intermédiaire d'un appel de groupe ;
au moins un élément de réseau du système de télécommunications est agencé pour créer des informations d'interconnexion pour transférer ledit appel à une connexion à commutation de paquets ;
en réponse auxdits dispositifs abonnés et tous les éléments de réseau pertinents possédant des informations appropriées pour établir une connexion à commutation de paquets, la partie de réseau à commutation de circuits est agencée pour terminer une voie de conversation dudit appel à commutation de circuits ;
la partie de réseau à commutation de paquets est agencée pour établir une connexion à commutation de paquets entre lesdits dispositifs abonnés sur la base de contrôle de serveur de communications de groupe ; et
ladite partie de réseau à commutation de paquets et lesdits dispositifs abonnés sont agencés pour établir (324-330) un appel de groupe permettant des communications entre plus de deux participants sur ladite connexion à commutation de paquets, moyennant quoi lesdits dispositifs abonnés sont inclus dans ledit appel de groupe sur la base desdites informations d'interconnexion.

16. Système de télécommunications selon la revendication 15, **caractérisé en ce que** :
lesdites informations d'interconnexion comprennent un identifiant commun pour identifier la connexion à commutation de circuits et la connexion à commutation de paquets dans ledit système de communications.

17. Système de télécommunications selon la revendication 15 ou 16, **caractérisé en ce que** :
au moins un desdits dispositifs abonnés est agencé pour établir au moins une connexion à commutation de paquets supplémentaire, qui est simultanée avec l'appel de groupe à commutation de paquets.

18. Système de télécommunications selon la revendication 17, **caractérisé en ce que**:
ledit dispositif abonné est agencé pour établir lesdites connexions à commutation de paquets par l'intermédiaire d'un réseau GPRS, et
ladite partie de réseau à commutation de paquets est agencée pour attribuer lesdites connexions à commutation de paquets simultanées avec des contextes PDP séparés.

19. Système de télécommunications selon la revendication 17, **caractérisé en ce que** :
ledit dispositif abonné est agencé pour établir lesdites connexions à commutation de paquets par l'intermédiaire d'un réseau GPRS, et
ladite partie de réseau à commutation de paquets est agencée pour attribuer lesdites connexions à commutation de paquets simultanées avec un contexte PDP commun.

20. Système de télécommunications selon l'une quelconque des revendications 15 à 19, **caractérisé en ce que** :
la partie de réseau à commutation de circuits est agencée pour laisser des informations d'appel appropriées et agencements de commutation, à l'exception de l'attribution de voie de conversation, dudit appel à commutation de circuits connexion dans le système de communications après que la voie de conversation dudit appel à commutation de circuits a été terminée.

21. Système de télécommunications selon l'une quelconque des revendications 15 à 20, **caractérisé en ce que** :
ledit dispositif abonné est agencé pour terminer lesdites connexions à commutation de paquets supplémentaires simultanées avec l'appel de groupe à commutation de paquets ;
un premier dispositif abonné est agencé pour transmettre (332) une demande de transfert dudit appel de groupe à commutation de paquets pour qu'il soit transporté par l'intermédiaire d'un appel vocal à commutation de circuits ;
en réponse auxdits dispositifs abonnés et tous les éléments de réseau pertinents possédant des informations appropriées pour établir un appel vocal à commutation de circuits, ladite partie de réseau à commutation de paquets est agencée pour terminer (342, 344) ledit appel de groupe à commutation de paquets; et
la partie de réseau à commutation de circuits est agencée pour établir un appel vocal à commutation de circuits entre lesdits dispositifs abonnés sur la base desdites informations d'interconnexion.

22. Dispositif abonné pour un système de communications mobile, comprenant :
des moyens pour établir une connexion à commutation de circuits (300) et une connexion à commutation de paquets par l'intermédiaire du système de communications mobile ;
des moyens de communications de groupe d'appel pour établir un appel de groupe sur la connexion à commutation de paquets, **caractérisé en ce que** ledit dispositif abonné comprend en outre :
des moyens pour transmettre (310), après avoir établi un appel à commutation de circuits, à un second dispositif abonné, une demande de transfert dudit appel à commutation de circuits pour qu'il soit transporté par l'intermédiaire d'un appel de groupe établi sur une connexion à commutation de paquets ;
des moyens pour recevoir, à partir du système de communications mobile, des informations appropriées pour établir une connexion à commutation de paquets, lesdites informations comprenant des informations d'interconnexion pour transférer ledit appel à une connexion à commutation de paquets ;
des moyens, répondants à la réception desdites informations, pour terminer (320) ledit appel à commutation de circuits ; moyennant quoi
le dispositif abonné est agencé pour établir une connexion à commutation de paquets audit second dispositif abonné ; et
lesdits moyens de communications de groupe d'appel sont agencés pour établir (324) un appel de groupe sur ladite connexion à commutation de paquets, moyennant quoi ledit dispositif abonné est agencé pour transmettre lesdites informations d'interconnexion au système de communications mobile pour inclure ledit dispositif abonné dans ledit appel de groupe.

23. Dispositif abonné selon la revendication 22, **caractérisé en ce que** :
lesdites informations d'interconnexion comprennent un identifiant commun pour identifier la connexion à commutation de circuits et la connexion à commutation de paquets dans ledit système de communications.

24. Dispositif abonné selon la revendication 22 ou 23, **caractérisé en ce que** :
le dispositif abonné est agencé pour établir au moins une connexion à commutation de paquets supplémentaire, qui est simultanée avec l'appel de groupe à commutation de paquets.

25. Dispositif abonné selon la revendication 24, **caractérisé en ce que** le dispositif abonné est agencé
pour établir lesdites connexions à commutation de paquets par l'intermédiaire d'un réseau GPRS, et
pour recevoir à partir du système de communications une attribution de contextes PDP séparés pour lesdites connexions à commutation de paquets simultanées.

26. Dispositif abonné selon la revendication 24, **caractérisé en ce que** le dispositif abonné est agencé
pour établir lesdites connexions à commutation de paquets par l'intermédiaire d'un réseau GPRS, et
pour recevoir à partir du système de communications une attribution d'un contexte PDP commun pour lesdites connexions à commutation de paquets simultanées.

27. Dispositif abonné selon l'une quelconque des revendications 22 à 26, **caractérisé en ce que** le dispositif abonné est agencé pour
transmettre (310) ladite demande de transfert d'appel en mettant l'appel vocal en attente, et transmettre la demande de transfert sur une autre voie de conversation comme commandes DTMF.

28. Dispositif abonné selon l'une quelconque des revendications 22 à 26, **caractérisé en ce que** le dispositif abonné est agencé pour
transmettre (310) ladite demande de transfert d'appel sur la voie de conversation de l'appel vocal actif en modifiant des commandes DTMF de ladite demande pour pouvoir être distinguées d'articles de conversation de l'appel vocal.

29. Dispositif abonné selon l'une quelconque des revendications 22 à 26, **caractérisé en ce que** le dispositif abonné est agencé pour
transmettre (310) ladite demande de transfert d'appel sous forme de message SMS.

30. Dispositif abonné selon l'une quelconque des revendications 22 à 26, **caractérisé en ce que** le dispositif abonné est agencé pour
transmettre (310) ladite demande de transfert d'appel par l'intermédiaire d'une connexion GPRS établie avant l'établissement de la connexion d'appel vocal à commutation de circuits pour la livraison d'informations de présence parmi les participants d'appel de groupe.

31. Dispositif abonné selon l'une quelconque des revendications 22 à 30, **caractérisé en ce que** le dispositif abonné est agencé pour
terminer lesdites connexions à commutation de paquets supplémentaires simultanées avec l'appel de groupe à commutation de paquets ;
transmettre (332) une demande de transfert dudit appel de groupe à commutation de paquets pour qu'il soit transporté par l'intermédiaire d'un appel vocal à commutation de circuits ;
recevoir (338, 340), à partir du système de communications mobile, des informations appropriées pour établir une connexion à commutation de circuits ;
terminer, en réponse à la réception desdites informations, ledit appel de groupe à commutation de paquets ; et
établir (350, 352) un appel vocal à commutation de circuits audit second dispositif abonné sur la base desdites informations d'interconnexion.

32. Dispositif abonné selon la revendication 31, **caractérisé en ce que** le dispositif abonné est agencé pour
recevoir une signalisation d'établissement d'appel terminé mobile d'un appel vocal à commutation de circuits à partir du système de communications.

33. Dispositif abonné selon la revendication 31, **caractérisé en ce que** le dispositif abonné est agencé pour
transmettre une signalisation d'établissement d'appel terminé mobile d'un appel vocal à commutation de circuits vers les autres dispositifs abonnés.
